# EUROPÄISCHE PATENTSCHRIFT

(11) **EP 0 520 120 B1**
(45) Veröffentlichungstag und Bekanntmachung des Hinweises auf die Patenterteilung: **13.12.1995**
(21) Anmeldenummer: 91810493.6
(22) Anmeldetag: 24.06.1991
(51) Int. Cl.: G03B 27/58, G03B 27/46

(54) **Fotografisches Kopiergerät**
Photographic printer
Tireuse photographique

(43) Veröffentlichungstag der Anmeldung: 30.12.1992
(73) Patentinhaber: GRETAG IMAGING AG, CH-8105 Regensdorf (CH)
(72) Erfinder: Müller,Kurt, 8104 Weiningen (CH); Rupp,Roberto, 5200 Brugg (CH)
(74) Vertreter: Kleewein, Walter, Dr.

(56) Entgegenhaltungen:
- DE-A- 3 713 170
- DE-A- 3 713 171

## Beschreibung

Die Erfindung betrifft ein fotografisches Kopiergerät zur Verarbeitung von in fahrbaren Kassetten unterbringbarem fotografischem Kopiermaterial gemäss Oberbegriff des Patentanspruchs 1.

In professionellen Fotolabors werden heutzutage fotografische Kopien - Papierbilder - von fotografischen Kopiervorlagen - z.B. Negativen - üblicherweise mit Hilfe von weitgehend vollautomatisch funktionierenden fotografischen Kopiergeräten - sogenannten fotografischen Printern - hergestellt. Das Bedienungspersonal hat bei derartigen Geräten im wesentlichen überwachende Funktionen, kontrolliert den Belichtungsvorgang und sorgt für einen möglichst kontinuierlichen Arbeitsablauf. Zu diesem Zweck kümmert sich das Bedienungspersonal um das Vorlagenmaterial - z.B. Negativfilme - und muss insbesondere dafür sorgen, dass immer genügend Kopiermaterial - unbelichtetes Fotopapier - bereitsteht und andererseits, dass belichtetes Kopiermaterial rechtzeitig von dem Kopiergerät entnommen wird. Bei den modernen fotografischen Kopiergeräten liegt das unbelichtete fotografische Kopiermaterial üblicherweise als sogenanntes Rollenmaterial vor, das auf einem in einer fahrbaren lichtdichten Vorratskassette angeordneten Wickelkern aufgewickelt ist. Diese Kassette ist eingangsseitig an das fotografische Kopiergerät andockbar. Automatische Fang- und Transportmittel im Kopiergerät besorgen den Transport des Kopiermaterials durch das Gerät. Ausgangsseitig ist eine leere Aufwickelkassette andockbar, die gleichfalls lichtdicht und fahrbar ist. Das belichtete Kopiermaterial wird automatisch in die Aufwickelkassette eingefädelt und auf deren Wickelkern aufgewickelt.

Fotografische Kopiergeräte mit automatischem Kopiermaterialtransport, die derartige fahrbare Vorratskassetten für das unbelichtete Kopiermaterial bzw. Aufwickelkassetten für das belichtete Kopiermaterial verwenden, sind durch im Handel erhältliche Geräte dieser Gattung bekannt. Bei diesen bekannten Kopiergeräten muss das Bedienungspersonal leere Vorrats- bzw. volle Aufwickelkassetten rechtzeitig auswechseln, und eine neue volle Papiervorratskassette bzw. eine neue leere Aufwickelkassette müssen schnellstmöglich wieder angedockt werden, um längere Stehzeiten des Kopiergerätes zu vermeiden. Der Stillstand des Kopiergerätes ist also im wesentlichen allein von der Reaktionszeit des Bedienungspersonals abhängig. Ueberdies ist das manuelle Kassettenwechseln auch mit einem relativ grossen Zeitaufwand verbunden. Das Bedienungspersonal muss daher genau im richtigen Augenblick für den Kassettenwechsel bereit stehen, da ansonsten das Kopiergerät unnötig lange stillsteht. Da heute in der Regel das Bedienungspersonal gleichzeitig mehrere Kopiergeräte bedient, ist diesbezüglich ein exaktes timing erforderlich, welches wiederum sehr grosse Aufmerksamkeit seitens des Bedienungspersonals erfordert. Für die übrigen Aufgaben, so z.B. den Kopiervorlagenwechsel bleibt kaum mehr Zeit. Insbesondere beim Übergang auf fotografische Kopiergeräte auf einer Stundenleistung von 15.000 und mehr Bildern sind all diese Aufgaben oft fast nicht mehr zu bewältigen.

Um diesem Nachteil abzuhelfen, wird bei einem weiteren bekannten fotografischen Kopiergerät vorgeschlagen, mehrere Vorrats- bzw. Aufwickelkassetten ein- bzw. ausgangsseitig des Kopiergerätes an einer vertikal angeordneten Drehscheibe eines separaten Kassettenwagens zu befestigen. Jeweils nach Entleerung einer Vorratskassette bzw. nach Füllung einer Aufwickelkassette werden die Drehscheiben automatisch gedreht und eine neue Vorratskassette oder Aufwickelkassette in die Verarbeitsungstellung gebracht. Bedenkt man, dass die Kassetten relativ gross und schwer sind, so ist einsichtig, dass dieses Konzept spezielle sehr leistungsfähige Antriebe für die Drehscheibe erfordert, die ihrerseits wiederum sehr gross sind und insbesondere das Gerät enorm verteuern. Auch erfordert bei dem relativ grossen Gewicht der Kassetten deren Lagerung sowie deren Befestigung auf der drehbaren Scheibe einen enormen zusätzlichen Aufwand. Die Gesamtanordnung wird sehr gross und insbesondere sehr schwer und ist sehr unhandlich zu transportieren.

In der US-A-4,853,742 ist vorgeschlagen, beispielsweise zwei Vorrats- bzw. Aufwickelkassetten hintereinander in der Kopiermaterialeingabe bzw. Kopiermaterialausgabeseite des Kopiergerätes anzuordnen. Ein- und ausgabeseitig ist je eine Zugvorrichtung am Kopiergerät vorgesehen, die mit den bereitgestellten Kassetten in Eingriff bringbar ist, um die jeweilige Kassette in die Verarbeitungsstellung zu ziehen. Zum Entfernen von leeren Vorratskassetten bzw. vollen Aufwickelkassetten aus der Verarbeitungsstellung sind an dem Kopiergerät zusätzliche, senkrecht zu den Zugmitteln wirkende Schubvorrichtungen vorgesehen. Das beschriebene Kopiergerät ist relativ komplex und aufwendig in seinem Aufbau. Durch das Hintereinanderstellen von jeweils wenigstens zwei Kassetten wird der Platzbedarf für das Kopiergerät deutlich vergrössert. Es sind zusätzliche Führungs- und Positionierungsmittel im Boden für die bereitgestellten Kassetten erforderlich, die im Falle des Fehlens angestellter Kassetten zu einem gefährlichen Hindernis für das Bedienungspersonal werden können. Ähnliches gilt umso mehr auch für die ausfahr- und einziehbaren Zug- bzw. Schubvorrichtungen am Kopiergerät.

In der DE-A-3,713,171 ist ein fotografisches Kopiergerät beschrieben, bei dem zwei oder drei Vorratskassetten bzw. Aufwickelkassetten neben- oder hintereinander angeordnet sind. Im Fall nebeneinander angeordneter Kassetten ist gezeigt, dass diese entweder parallel zu der Kopiermaterialtransportrichtung oder unter einem Winkel schräg zu dieser bereitgestellt sein können. Abhängig davon, wie die Kassetten bezüglich der Kopiermaterialtransportrichtung angeordnet sind, sind Umlenk- und Führungsvorrichtungen vorgesehen, mit deren Hilfe das Kopiermaterial aus jeder Vorratskassette in die Transportrichtung gelenkt werden soll, bzw. aus der Transportrichtung zu der jeweiligen Aufwickelkassette umgelenkt werden soll. In diesen Umlenkvorrichtungen wird das Kopiermaterial in Form einer Schleife in die jeweils erforderliche Richtung geführt. Bei diesen Umlenk- und Führungsvorrichtungen ist die Verletzungsgefahr für die Beschichtung des fotografischen Kopiermaterials relativ gross. Ausserdem ragen bei diesem Kopiergerät die Kassetten beträchtlich über die Abmessungen des Gerätes hinaus, sodass der Platzbedarf deutlich vergrössert wird. Durch zusätzliche Anzeigemittel muss sichergestellt werden, dass das Bedienungspersonal immer jeweils die richtige leere oder volle Kassette aus dem Kassettenverband entfernt und gegen eine entsprechende volle bzw. leere neue Kassette austauscht.

Aufgabe der vorliegenden Erfindung ist es daher, all diese Nachteile der bekannten fotografischen Kopiergeräte zu beseitigen. Insbesondere soll ein fotografisches Kopiergerät geschaffen werden, welches einen kontinuierlichen Betrieb bei hohen Kopierleistungen erlaubt und zugleich das Bedienungspersonal von zusätzlichen Überwachungsaufgaben des Füllstandes der Kassetten entlastet. Angedockte Kassetten und weitere an das Gerät angestellte Kassetten sollen nur unwesentlich über die Abmessungen des Kopiergerätes hinausragen. Auf zusätzliche Umlenk- und Führungsvorrichtungen für das Kopiermaterial soll verzichtet werden können. Zudem sollen keine Führungs- und Positionierungsmittel am Boden vor dem Kopiergerät angeordnet sein und keine Zug- oder Schubvorrichtungen für Kassetten aus dem Kopiergerät ausfahrbar sein.

All diese und noch weitere Aufgaben werden durch ein fotografisches Kopiergerät gelöst, welches die Merkmale des Patentanspruchs 1 aufweist. Insbesondere sind bei dem erfindungsgemässen Kopiergerät jeweils wenigstens zwei Kassetten zu beiden Seiten der Belichtungsstation derart zu einem Block anstellbar, dass die Kassettenmäuler der eingangsseitig angeordneten Papiervorratskassetten und die der ausgangsseitig angeordneten Aufwickelkassetten einander etwa gegenüberliegen. Dabei fluchten sie mit der Transportbahn für das Kopiermaterial bzw. mit einer auf die Gerätetiefe bezogen hinter der Transportbahn verlaufenden Parallelen. Die jeweils zu einem Block anordbaren Kassetten sind mit Hilfe von am Kopiergerät eingangsseitig und ausgangsseitig vorgesehenen Transportvorrichtungen quer zur Transportbahn für das Kopiermaterial bewegbar. Auf diese Weise ist die auf die Gerätetiefe bezogen hintere Kassette in die Arbeitsstellung bewegbar, während zugleich die vordere Kassette quer zur Transportbahn aus der Arbeitsstellung verschiebbar ist.

Besonders vorteilhaft werden die jeweils wenigstens zwei Kassetten an eingangs- bzw. ausgangsseitig der Belichtungsstation dafür vorgesehenen etwa quaderförmigen Stellplätzen angeordnet. Auf diese Weise ist gewährleistet, dass die zu einem Block anstellbaren Kassetten nur unwesentlich über die Abmessungen des Kopiergerätes hinausragen. Dabei wird vorteilhafterweise auch darauf geachtet, dass die Tiefe für der Kopiergeräte 80 cm nicht überschreitet. Zur Erleichterung der Positionierung der Kassetten an ihren Stellplätzen sind vorzugsweise Positionierungsmittel am Kopiergerät festgelegt.

In besonders bevorzugter Weise ist die eingangs- und ausgangsseitig der Belichtungsstation jeweils vorgesehene Transportvorrichtung als Kassettenkran ausgebildet, der jeweils oberhalb der Kassetten am Kopiergerät angeordnet ist und quer zur Transportbahn für das Kopiermaterial bewegbar ist. Dabei umfasst der Kassettenkran vorzugsweise eine Laufkatze, die in quer zur Transportbahn für das Kopiermaterial im Kopiergerät angeordneten seitlichen Führungen von einer Endposition in eine zweite Endposition horizontal bewegbar ist, und eine darunter angeordnete Hubplatte, die zusammen mit der Laufkatze horizontal bewegbar und gegenüber der Laufkatze vertikal verstellbar ist. Besonders geeignet und platzsparend sind Spindeltriebe als Höhenverstellmittel für die Hubplatte. Dabei sind die Spindelsäulen vorzugsweise an der Hubplatte vorgesehen, die mit an der Laufkatze angeordneten rotierbaren Spindelmuttern in Eingriff stehen. Für ein verkanntungsfreies Heben und Absenken der Hubplatte sorgt dabei einfach ein Koppeln der rotierbaren Spindelmuttern untereinander vorzugsweise über einen Zahnriemen, der wiederum von einem an der Laufkatze vorgesehenen steuerbaren Antriebmotor antreibbar ist. Zwei Führungssäulen, die sich von der Oberfläche der Hubplatte erstrecken und durch zwei korrespondierende Führungsbohrungen in der Laufkatze geführt sind, sorgen für eine noch bessere Führung der Hubplatte bei der vertikalen Verstellung.

In besonders bevorzugter Weise erfolgt auch die Horizontalverschiebung der Laufkatze, quer zur Transportrichtung für das Kopiermaterial, mit Hilfe eines Spindeltriebes. Dieser Spindeltrieb umfasst einen Antriebsmotor, der fest mit dem Rahmen des Kopiergerätes verbunden ist, eine mit dem Rotor des Antriebsmotors drehfest verbundene rotierbare Spindelstange und eine mit der Spindelstange in Eingriff stehende und entlang des mit einem Gewinde versehenen Teils der Spindelstange verschiebbare Spindelmutter, die mit der Laufkatze verbunden ist. Besonders gut und verkantungsfrei ist die Laufkatze verschiebbar, wenn ihre seitlichen Führungen einerseits als Schlitzführung, in der eine an der Laufkatze seitlich angeordnete Stützrolle bewegbar ist, und andererseits als Stützwelle, die durch eine parallel zur horizontalen Verschieberichtung verlaufende Bohrung in der Laufkatze geführt ist, ausgebildet sind.

Um zu gewährleisten, dass eine Kassette unverrückbar aufnehmbar ist, sind an den Breitenrändern der Hubplatte zwei Fixierstifte an der Oberseite angeordnet, die nach dem Einführen der Hubplatte, beim Anheben derselben, in zwei an der Oberseite der Kassette quer zur Transportbahn für das Kopiermaterial verlaufende seitliche Führungen und Widerlager, in Bohrungen in den seitlichen Widerlagern einschiebbar sind. Die Breite der Hubplatte entspricht etwa der Breite der Kassette, vorzugsweise ist sie sogar etwas weniger breit.

Ausgangsseitig der Belichtungsstation weist das Kopiergerät vorzugsweise einen Antriebsmechanismus für den Wickelkern der Aufwickelkassette auf, der vorzugsweise in zwei Endpositionen bewegbar ist, aus einer ersten Position, in der er in Eingriff mit Antriebsübertragungsmitteln an der angedockten Kassette steht, in eine zweite Position, in der er ausser Eingriff mit den Antriebsübertragungsmitteln steht, und umgekehrt. Vorzugsweise sind die Antriebsübertragungsmittel in einer Ausnehmung an der kassettenmaulseitigen Stirnfläche der Aufwickelkassette angeordnet. Besonders vorteilhaft ist es, wenn der Antriebsmechanismus für den Wickelkern durch ein an einem Schwenkarm angeordnetes, motorisch antreibbares Zahnrad gebildet ist, und wenn die Antriebsübertragungsmittel durch einen beidseitig verzahnten Flachriemen gebildet sind, der über zwei in der Ausnehmung an die Stirnseite der Kassette angeordnete Zahnräder geführt ist, von denen eines gegen eine Federkraft in Richtung des zweiten Zahnrades um eine Wegstrecke verschiebbar ist, während das zweite Zahnrad ortsfest angeordnet und drehfest mit einem dritten koaxialen Zahnrad verbunden ist, welches wiederum vorzugsweise über einen Transmissionsriemen mit dem Wickelkern der Aufwickelkassette gekoppelt ist.

Die Verschwenkung des Schwenkarms erfolgt vorzugsweise motorisch mit Hilfe eines weiteren Spindeltriebes. Dabei steht eine am Schwenkarm befestigte Spindelstange in Eingriff mit einer im Kopiergerät ortsfest angeordneten motorisch rotierbaren Spindelmutter derart in Eingriff, dass durch Rotation der Spindelmutter im oder entgegen dem Uhrzeigersinn die Spindelstange aus dem Kopiergerät heraus bzw. in das Kopiergerät hineinbewegt wird und somit der Schwenkarm aus der einen Endposition in die andere und umgekehrt geschwenkt wird.

Zur Erleichterung der horizontalen Verschiebung der Kassetten sind die eingangs- bzw. ausgangsseitig der Belichtungsstation am Kopiergerät vorgesehenen Kussmäuler aus einer Arbeitsposition, in der sie seitlich der Belichtungsstation aus dem Kopiergerät herausragen und die Kassettenmäuler lichtdicht umschliessen, in eine zweite Position zurückziehbar, in der sie die Kassettenmäuler der noch in der Arbeitsstellung befindlichen Kassetten zum Kassettenwechsel freigeben. Besonders vorteilhaft ist es, wenn die Kussmäuler motorisch, vorzugsweise über Spindeltriebe ein- und ausfahrbar sind.

Zur besseren Fixierung der Kassetten in ihrer Arbeitsstellung ist vorzugsweise unterhalb jedes Kussmauls eine motorisch, beispielsweise über einen Spindeltrieb, ein- und ausfahrbare Arretierhülse am Kopiergerät vorgesehen, welche mit einem entsprechenden unterhalb des Kassettenmauls an der Kassettenstirnseite angeordneten Zapfen in lösbaren Eingriff bringbar ist.

Vorzugsweise sind die Kassetten in ihrer Arbeitsstellung am zugehörigen Kassettenkran aufgehängt da in diesem Fall Bodenunebenheiten praktisch keine Rolle spielen.

Als besonders vorteilhaft hat sich auch die Verwendung von speziell für das erfindungsgemässe Kopiergerät modifizierten Vorrats- bzw. Aufwickelkassetten erwiesen. Diese Kassetten sind bezüglich ihres Kassettenmaules oder der Arretierzapfen aufgebaut wie bekannte Kassetten. Neu ist bei diesen Kassetten, dass die Antriebsübertragungsmittel nicht mehr wie bei bekannten Kassetten durch ein ausserhalb der Kassette angeordnetes und mit dem Wickelkern drehfest verbundenes koaxiales seitliches Zahnrad gebildet werden, sondern dass die Antriebsübertragungsmittel in einer Ausnehmung an der kassettenmaulseitigen Stirnfläche der Kassette angeordnet sind. Diese Ausnehmung ist gegenüber dem Kassetteninneren selbstverständlich lichtdicht abgeschottet. In einer bevorzugten Ausführungsart umfassen die neuartigen Antriebsübertragungsmittel einen beidseitig verzahnten Flachriemen, der über zwei in die Ausnehmung angeordnete Zahnräder geführt ist. Eines der Zahnräder, beispielsweise das obere, ist gegen eine Federkraft in Richtung des zweiten Zahnrades um eine kleine Wegstrecke verschiebbar. Das zweite Zahnrad ist ortsfest angeordnet und drehfest mit einem dritten koaxialen Zahnrad verbunden. Ein Transmissionsriemen verbindet das dritte Zahnrad mit dem Wickelkern. Auf diese Weise wird die von den Antriebsmitteln im Kopiergerät auf den Flachriemen übertragene Drehbewegung möglichst ruckfrei auf den Wickelkern übertragen.

Weitere besonders vorteilhafte Ausgestaltungs varianten des erfindungsgemässen Kopiergerätes ergeben sich aus der nachfolgenden Beschreibung im Zusammenhang mit dem in den Figuren dargestellten Ausführungsbeispiel. Es zeigen in zum Teil schematisierter Darstellung:
- Fig. 1: ein erfindungsgemässes fotografisches Kopiergerät mit angestellten Kassetten,
- Fig. 2: ein Ausführungsbeispiel eines Kassettenkrans mit horizontal verschiebbarer Laufkatze und vertikal verstellbarer Hubplatte,
- Fig. 3: die in Fig. 2 mit 12 bezeichnete Laufkatze mit Horizontalverstelleinrichtung,
- Fig. 4: die in Fig. 2 mit 13 bezeichnete Hubplatte,
- Fig. 5: den Kassettenkran mit abgesenkter Kassette,
- Fig. 6: den Kassettenkran mit angehobener Kassette,
- Fig. 7: eine beispielsweise Ausgestaltung einer Schnittstelle zwischen Kassette und Kopiergerät mit angedockter Kassette und
- Fig. 8: die Schnittstelle aus Fig. 7 mit abgedockter Kassette.

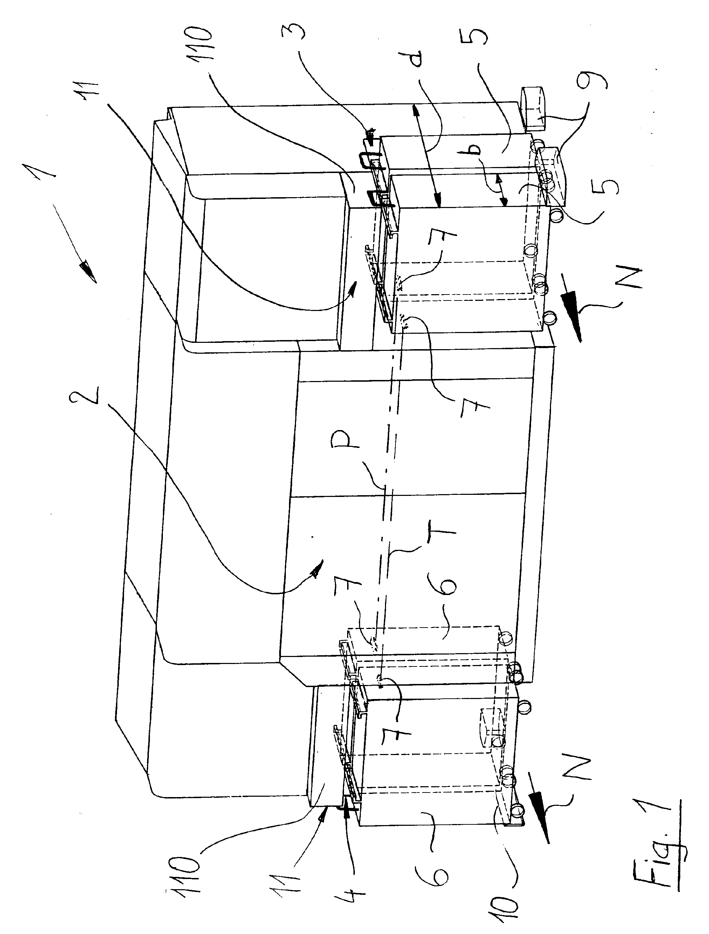

Das erfindungsgemässe fotografische Kopiergerät ist in Fig. 1 gesamthaft mit 1 bezeichnet. Insbesondere handelt es sich dabei um ein Kopiergerät, bei dem fotografisches Kopiermaterial aus einem Kassettenmaul 7 einer angedockten Vorratskassette 5 automatisch in das Kopiergerät 1 in eine Transportbahn T einführbar und nach Passieren einer Belichtungsstation 2 durch automatisch arbeitende Vorrichtungen vom Kopiergerät 1 durch ein Kassettenmaul 7 in eine angedockte Aufwickelkassette 6 einfädelbar ist. Praktisch alle fotografischen Kopiergeräte neuerer Bauart arbeiten nach diesem Prinzip; derartige Geräte sind beispielsweise in der US-A-4,092,067 oder der 4,101,216, aber auch in der US-A-4,853,742 oder der DE-A-3,713,171 beschrieben. Die Beschreibung des erfindungsgemässen fotografischen Kopiergerätes beschränkt sich daher auf die erfindungsrelevanten Unterschiede zu diesem Gerätetyp mit automatisiertem Kopiermaterialtransport.

Eingangsseitig der Belichtungsstation 2 des Kopiergerätes sind Vorratskassetten 5 und ausgangsseitig sind Aufwickelkassetten 6 dargestellt. Insbesondere sind jeweils zwei Kassetten 5 bzw. 6 derart zu einem Block aufgestellt, dass die Kassettenmäuler 7 der Vorratskassetten 5 und der Aufwickelkassetten 6 einander etwa gegenüber liegen. Dabei fluchten die Kassettenmäuler 7 der in der jeweiligen Arbeitsstellung befindlichen Vorratskassette 5 bzw. der Aufwickelkassette 6 mit der Transportbahn T für das Kopiermaterial. Die auf die Gerätetiefe d bezogenen hinteren Vorrats- bzw. Aufwickelkassetten 5 bzw. 6 fluchten mit einer Parallelen P zur Transportbahn T. Oberhalb der eingangs- bzw. ausgansseitig jeweils zu einem Block angestellten Vorrats- bzw. Aufwickelkassetten 5 bzw. 6 vorgesehen. Insbesondere sind mit Hilfe dieser Transportvorrichtungen 11 die eingangsseitigen Vorratskassetten 5 bzw. die ausgangsartigen Aufwickelkassetten 6 quer zur Transportbahn T für das Kopiermaterial M transportierbar. Auf diese Weise sind die jeweils hinteren Kassetten in die Arbeitsstellung bewegbar (in der ihre Kassettenmäuler 7 mit der Transportbahn T fluchten) während zugleich die jeweils vorderen Kassetten in einer senkrecht zur Transportbahn T verlaufenden Richtung N aus der Arbeitsstellung wegbewegbar sind. Da es sich bei den Kassetten üblicherweise um fahrbare Kassetten handelt, werden die vorderen Kassetten vorzugsweise während der Querbewegung der hinteren Kassetten von diesen aus der Arbeitsstellung weggeschoben.

Beidseits der Belichtungsstation 2 sind etwa quaderförmige Stellplätze 3 bzw. 4 am Kopiergerät 1 vorgesehen. Diese Stellplätze 3, 4 sind derart bemessen, dass die an den Stellplätzen 3, 4 zu einem Block angestellten Kassetten 5 bzw. 6 nur unwesentlich über die Längserstreckung des Kopiergerätes 1 hinausragen. Insbesondere ragt nur das hintere Ende der Kassetten, welches an der Oberseite einen Griffbügel (72) oder ähnliches aufweist, etwa 10 cm - 20 cm über die Länge des Kopiergerätes hinaus. Auf diese Weise ist der Platzbedarf für das Kopiergerät 1 minimiert Gemäss Fig. 1 sind jeweils zwei Kassetten zu einem Block anstellbar, jedoch könnten bei grösserer Gerätetiefe d auch Stellplätze für mehr als zwei Kassetten vorgesehen sein. Bei den üblichen Kassettenbreiten weisen die Stellplätze jedoch vorzugsweise Platz für zwei Kassetten auf, um zu gewährleisten, dass die Gerätetiefe d des fotografischen Kopiergerätes 80 cm nicht überschreitet. Die Tiefe d von 80 cm ist deshalb so bedeutsam, da sie der lichten Weite der üblicherweise in Gebäuden angebrachten Türstöcke entspricht, und somit ein Gerät dieser Tiefe einen derartigen Türstock gerade noch passieren kann.

Zur Erleichterung der Positionierung der Kassetten an ihren Stellplätzen sind Positionierungsmittel 9, 10 am Kopiergerät vorgesehen. Vorzugsweise sind diese als Anschlag für die dem Kassettenmaul 7 gegenüberliegende Rückfläche der Kassette ausgebildet und im Bereich der vorderen, in der Arbeitsstellung befindlichen Kassette im Boden vorgesehen. Die Anschläge 9, 10 erstrecken sich dabei über die Breite b der vorderen Kassette, der Bodenbereich des Stellplatzteils für die hintere Kassette ist hindernisfrei, um ein ungehindertes Einschieben weiterer Vorrats- bzw. Aufwickelkassetten 5 bzw. 6 zu erlauben.

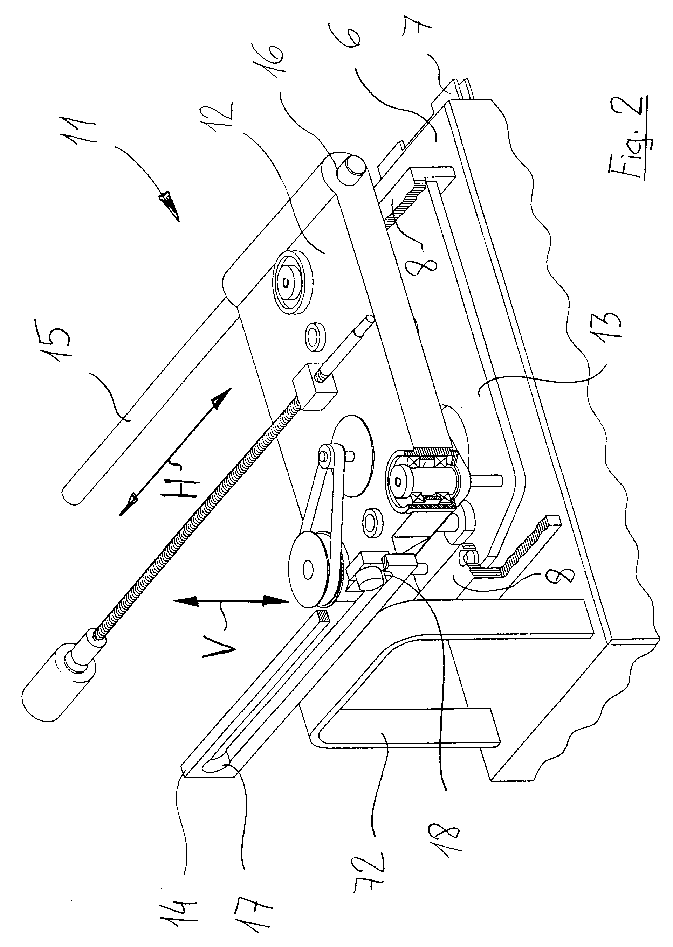

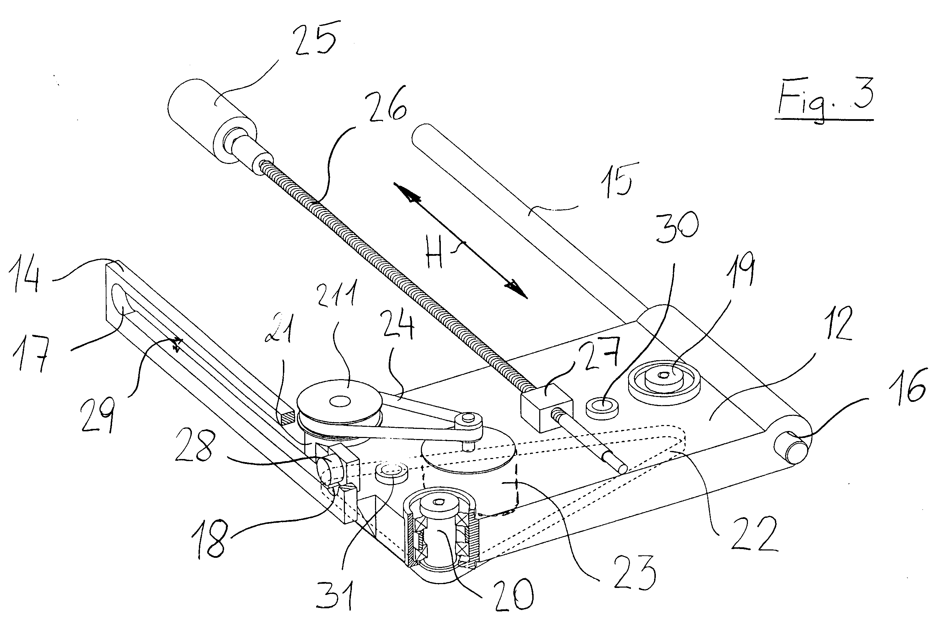

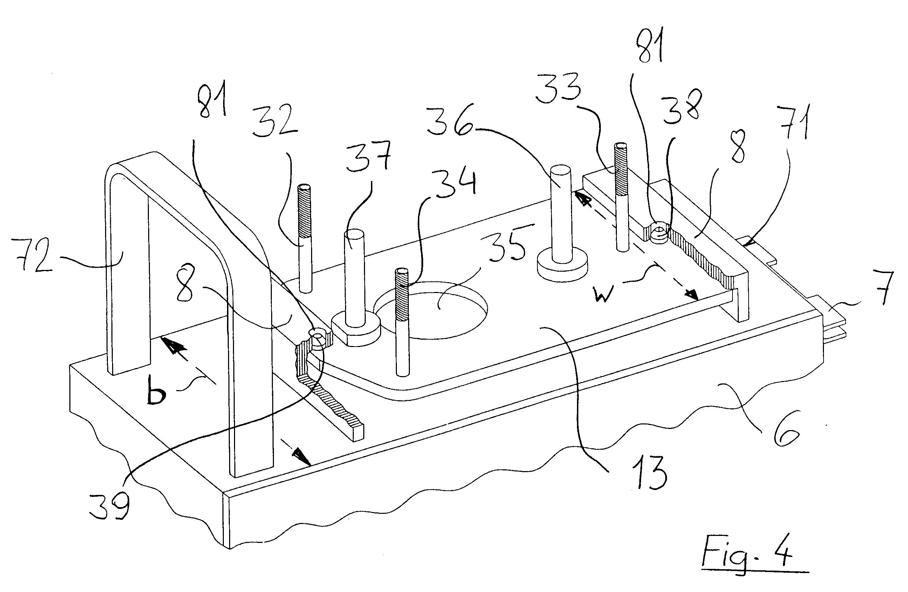

Die in Fig. 1 oberhalb des eingangsseitigen Stellplatzes 3 bzw. des ausgangsseitigen Stellplatzes 4 für die Kassetten 5 bzw. 6 zu beiden Seiten der Belichtungsstation 2 angedeuteten Transportvorrichtungen 11 sind beispielsweise jeweils als Kassettenkran ausgebildet und in den Figuren 2-6 näher dargestellt. Gemäss Fig. 2 umfasst jeder Kassettenkran 11 eine Laufkatze 12, die in sich quer zur Transportbahn T für das Kopiermaterial M erstreckenden seitlichen Führungen 14 und 15 zwischen zwei Endpositionen in horizontale Richtung H bewegbar ist, und eine darunter angeordnete Hubplatte 13, die zusammen mit der Laufkatze 12 horizontal bewegbar und gegenüber der Laufkatze 12 in vertikale Richtung V verstellbar ist. Zweckmässigerweise erfolgt die Vertikalverstellung der Hubplatte 13 über Spindeltriebe, die als Höhenverstellmittel besonders geeignet und platzsparend sind. Dazu sind an der Laufkatze 12 rotierbare Spindelmuttern 19, 20, 21 vorgesehen. Die Spindelmuttern 19, 20, 21 stehen mit Spindelsäulen 32, 33, 34 in Eingriff, die sich von der Oberfläche der Hubplatte 13 erstrecken. Durch Rotation der Spindelmuttern 19, 20, 21 im oder entgegen dem Uhrzeigersinn wird die Hubplatte 13 gegenüber der niveaumässig fixierten Laufkatze 12 gehoben oder abgesenkt. Die rotierbaren Spindelmuttern 19, 20, 21 sind dabei vorteilhafterweise untereinander gekoppelt, um eine verkanntungsfreie Bewegung der Hubplatte 13 zu gewährleisten. Vorzugsweise erfolgt die Kopplung über einen Zahnriemen 22, der über an der Unterseite der Laufkatze angeordnete und mit den zugehörigen Spindelmuttern 19, 20, 21 drehfest verbundene Antriebsräder 190, 200, 210 geführt ist. Der eigenliche Antrieb der Spindelmuttern 19, 20, 21 erfolgt durch einen steuerbaren Motor 23, der an der Laufkatze befestigt ist. Die Rotationsbewegung des Rotors des Motors wird über einen Antriebsriemen 24 und ein weiteres, gemäss der Fig. 3 an der Oberseite der Laufkatze angeordnetes und mit einer der Spindelmuttern, hier mit der Spindelmutter 21, drehfest verbundenes Antriebsrad 211 übertragen. Auf diese Weise werden durch motorisches Antreiben einer der Spindelmuttern 21 über den Kopplungsriemen 22 auch die anderen Spindelmuttern 19, 20 simultan mitangetrieben. Zur noch besseren Führung der Hubplatte 13 bei der Vertikalverstellung erstrecken sich von ihrer Oberseite zwei Führungssäulen 36, 37 die durch zwei korrespondierende Führungsbohrungen 30, 31 in der Laufkatze geführt und in diesen verschiebbar sind. In Fig. 4 ist zwischen den Führungssäulen 36, 37 eine etwa kreisförmige Öffnung 35 dargestellt. Diese Öffnung 35 ist zur Aufnahme des Motors 23 beim Anheben der Hubplatte 13 ausgebildet, der ja gemäss dem dargestellten Ausführungsbeispiel an der Unterseite der Laufkatze angeordnet ist. Auf diese Weise ist die Gesamtkonstruktion des Kassettenkrans 11 sehr kompakt, ohne dass die Unterkante des Motors 23 die Verstellbarkeit der Hubplatte 13 behindert.

Es versteht sich, dass die dargestellten Anordnungen der Spindelmuttern 19, 20, 21, der Spindelsäulen 32, 33, 34, der Führungssäulen 36, 37, des Zahnriemens 22 samt den mit den Spindelmuttern verbundenen Antriebsrädern 190, 200, 210, 211, des Motors 23 und des Antriebsriemens 24 nur beispielhaft sind. Selbstverständlich könnten die Spindelmuttern auch in der Hubplatte vorgesehen sein, die Spindelsäulen und die Führungssäulen sich von der Unterseite der Laufkatze erstrecken, die Anordnung der Antriebsräder und der Antriebs- und Zahnriemen eine andere sein. Derartige Modifikationen sind im Rahmen von Äquivalenzbetrachtungen für den Fachmann selbstverständlich und im Rahmen des Erfindungsgedankens mitumfasst.

Vorzugsweise erfolgt auch die Horizontalverschiebung H der Laufkatze 12, quer zur Transportrichtung T für das Kopiermaterial M, mit Hilfe eines Spindeltriebes. Dieser Spindeltrieb umfasst einen steuerbaren Antriebsmotor 25, der fest mit dem Rahmen des Kopiergerätes 1 verbunden ist. Eine um ihre Längsachse rotierbare Spindelstange 26 ist drehfest mit dem Rotor des Motors 25 verbunden. Die Spindelstange 26 steht mit einer Spindelmutter 27 in Eingriff, die ortsfest an der Oberseite der Laufkatze 12 angeordnet ist. Durch Rotation der Spindelstange im oder entgegen dem Uhrzeigersinn ist die Laufkatze 12 entlang ihrer seitlichen Führungen 14, 15 über den mit einem Gewinde versehenen Teil der Spindelstange 26 horizontal vor und zurück verschiebbar. Besonders gut und verkanntungsfrei ist die Laufkatze 12 verschiebbar, wenn ihre seitlichen Führungen 14 bzw. 15 einerseits als Schlitzführung, zur Aufnahme einer an der Breitseite der Laufkatze 12 angeordneten Stützrolle 28, und andererseits als Stützwelle, die in einer parallel zur Verschieberichtung H verlaufenden Bohrung 16 in der Laufkatze 12 geführt ist, ausgebildet sind. Im Falle der Schlitzführung 14 läuft die Stützrolle 28 in einem Schlitz 29 zwischen zwei muldenartig ausgebildeten Vertiefung 17 und 18, die die hintere bzw. die vordere Endposition der Verschiebung bestimmen. Die Schlitzführung 14 und die Stützwelle 15 können feste Bestandteile des Rahmens des Kopiergerätes 1 sein, sie können aber auch, wie in den Fig. 1, 5 und 6 angedeutet, innerhalb eines Gehäuses 110 vorgesehen sein, welches gesamthaft eingangs- bzw. ausgangsseitig der Belichtungsstation 2 oberhalb der Stellplätze 3 und 4 am Rahmen des Kopiergerätes befestigbar ist.

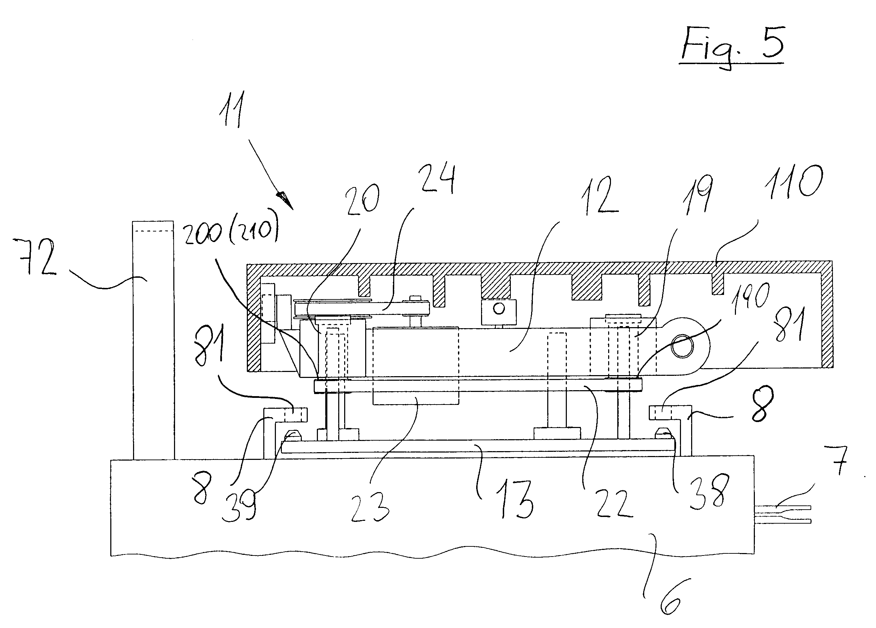

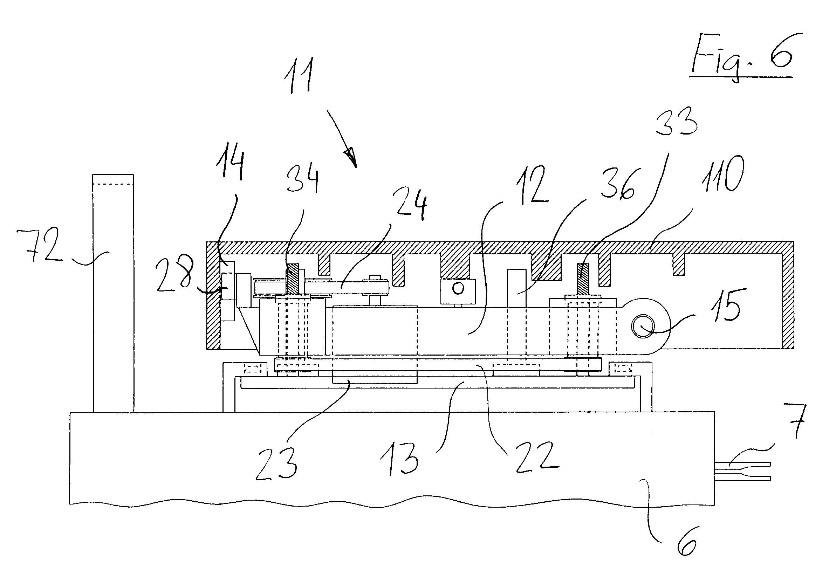

Die Vorrats- bzw. die Aufwickelkassetten 5 bzw. 6 sind mit Rollen, Rädern oder ähnlichen Mitteln ausgestattet, die ein Verschieben der Kassetten erlauben. Insbesondere sind die Rollen, Räder oder ähnliches derart ausgebildet, dass sowohl eine Bewegung der Kassetten in ihre Längsrichtung als auch in einer dazu senkrechten horizontalen Richtung möglichist. Um die Kassetten besser von Hand manipulieren zu können, sind diese an ihrer Oberseite vorzugsweise mit einem Griffbügel 72 oder ähnlichem ausgestattet. Gleichfalls an der Oberseite der Kassetten 5 bzw. 6 sind jeweils 2 seitliche Führungsschienen 8 für die Hubplatte 13 vorgesehen, die quer zur Längserstreckung der Kassetten angeordnet sind und sich etwa über die gesamte Breite der Kassetten erstrecken. Die Führungsschienen 8 haben die Form von Winkeleisen und dienen auch als Widerlager für die eingefahrene Hubplatte 13. Dabei entspricht der Abstand zweier Führungsschienen 8 gerade etwa der Länge der Hubplatte 13, derart, dass diese ohne Verkanntungsgefahr zuverlässig zwischen die seitlichen Führungsschienen 8 einfahrbar ist. (Fig. 5) Vorzugsweise weisen die als Widerlager dienenden Schenkel der Führungsschienen 8 Bohrungen 81 auf, in welche Fixierstifte 38, 39 einführbar sind, die an den Querrändern der Oberseite der Hubplatte 13 vorgesehen sind. Auf diese Weise ist jede Kassette zuverlässig gegen ein Abrutschen beim Anheben der Hubplatte 13 gesichert. (Fig. 6)

Um zu gewährleisten, dass jeweils nur eine der zu einem Block in den jeweiligen Stellplätzen 3 bzw. 4 angeordneten Kassetten 5, 6 von der Hubplatte 13 erfasst wird, entspricht die Breite w der Hubplatte 13 etwa der Breite b der Kassetten. Vorzugsweise ist die Hubplatte 13 sogar etwas weniger breit als die Kassetten.

Da die Kassetten 5, 6 im leeren und noch mehr im gefüllten Zustand ein nicht unerhebliches Gewicht aufweisen, müssen die Kassettenkräne 11 sehr stabil ausgebildet sein. Vorzugsweise werden die am stärksten beanspruchten Bauteile wie die Hubplatte 13, die seitlichen Führungen 14, 15, die Spindeln der Spindeltriebe sowie die Führungssäulen usw. aus Stahl gefertigt.

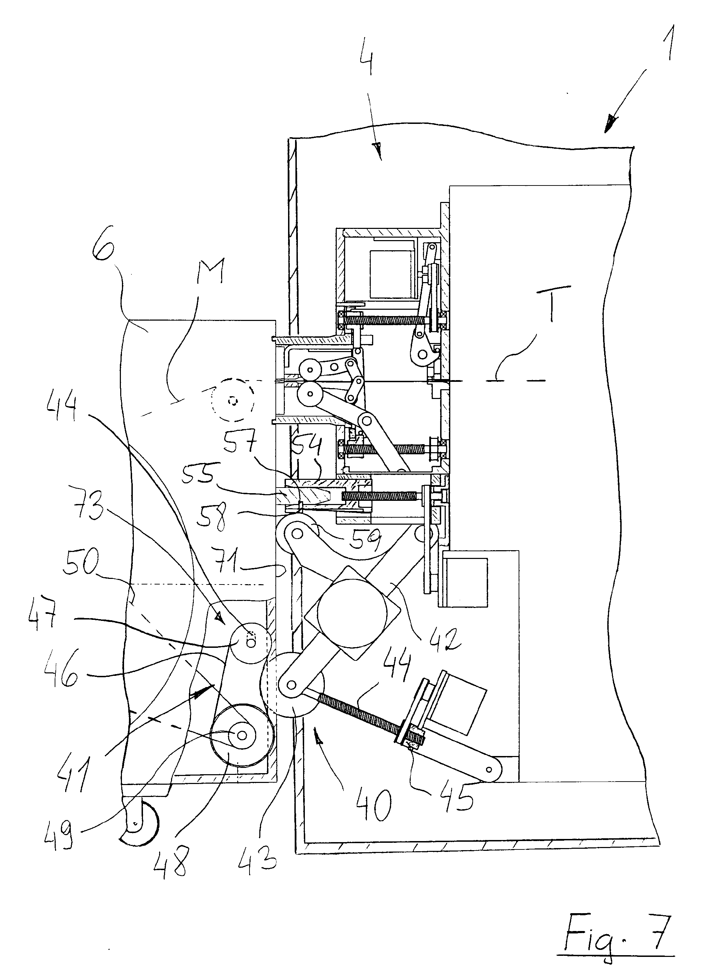

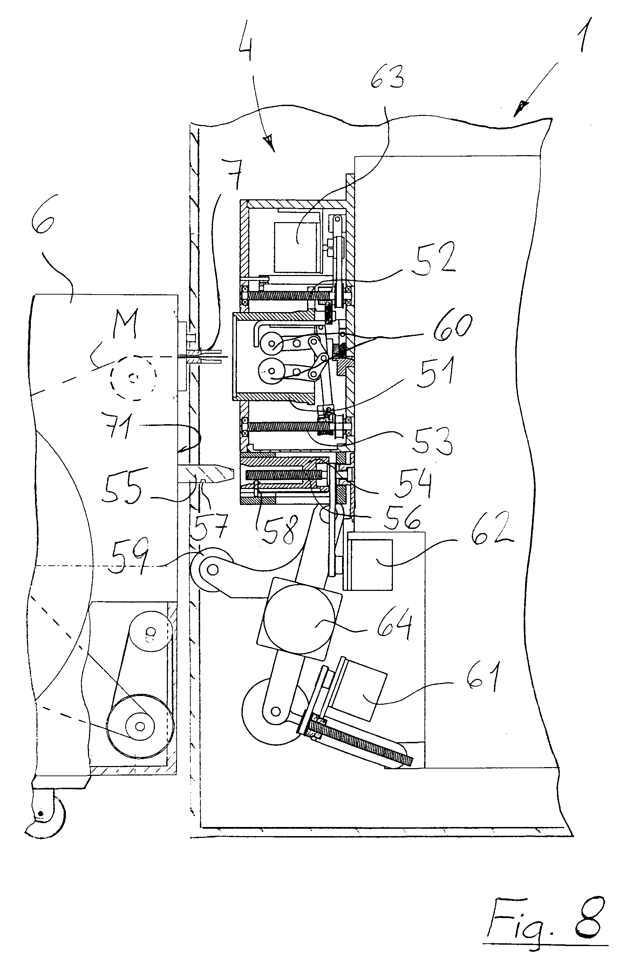

Beidseits der Belichtungsstation 2 sind am Kopiergerät 1 Andockschnittstellen für die jeweils in der Arbeitsposition befindlichen Vorrats- bzw. Aufwickelkassetten 5 bzw. 6 vorgesehen. Wie auch bei den gattungsgemässen Kopiergeräten umfassen diese Schnittstellen jeweils Kussmäuler 51 für das Kassettenmaul 7 der jeweiligen Kassette. Zum Unterschied von den bekannten Geräten mit feststehenden Kussmäulern 51 sind bei dem erfindungsgemässen Kopiergerät 1 die Kussmäuler 51 aus einer Arbeitsposition, in der sie seitlich der Belichtungsstation 2 aus dem Kopiergerät 1 herausragen und in den jeweiligen Stellplatz 3 bzw. 4 hineinragen und die Kassettenmäuler 7 der jeweiligen in der Arbeitsstellung befindlichen Kassetten lichtdicht umschliessen (Fig. 7), in eine zweite Position zurückziehbar, in der sie die Kassettenmäuler 7 der in der Arbeitsstellung befindlichen Kassetten 5 bzw. 6 freigeben und umgekehrt (Fig. 8). Auf diese Weise kann bei zurückgezogenem Kussmaul 51 der Kassettenkran 11 einfach und ungehindert die jeweils hintere Kassette in die Arbeitsstellung heben, wobei zugleich die vordere Kassette von der jeweils dahinter angeordneten quer zur Transportrichtung T für das Kopiermaterial M aus der Arbeitsstellung weggeschoben wird. Vorzugsweise sind die Kussmäuler 51 eingangs- und ausgangsseitig daher mit motorisch antreibbaren Spindeltrieben 52 ausgestattet. Gemäss dem in den Fig. 7 und 8 in angedocktem und in abgedocktem Zustand dargestellten Ausführungsbeispiel des Kussmauls 51 sind diese Spindeltriebe oberhalb des Kussmauls 51 angeordnet. Insbesondere umfasst jeder Spindeltrieb eine Spindelmutter, die mit dem Kussmaul 51 verbunden ist, und eine drehbar gelagerte, über einen steuerbaren Motor 63 antreibbare Spindelwelle. Durch Rotation der Spindelwelle im oder entgegen dem Uhrzeigersinn wird die Spindelmutter längs der Spindelwelle verschoben und damit das Kussmaul 51 aus dem Kopiergerät 1 heraus- oder in das Kopiergerät hineinbewegt.

Ein Hilfsrollenpaar 60 ist gemeinsam mit dem Kussmaul 51 vorschieb- bzw. rückziehbar. Dieses Hilfsrollenpaar 60 dient eingangsseitig zum Fassen des aus der Vorratskassette ragenden Vorderendes des Kopiermaterials und ausgangsseitig zum Festklemmen des detektierten Hinterendes des belichteten Kopiermaterials. Zu diesem Zweck ist unterhalb jedes Kussmauls 51 in den Fig. 7 und 8 ein weiterer motorisch antreibbarer Spindeltrieb 53 dargestellt. Ein mit der beweglichen Spindelmutter des Spindeltriebes verbundenes Gestänge bewegt die beiden übereinander angeordneten Rollen des Hilfsrollenpaars 60 aufeinander zu, so dass sie das Vorderende bzw. das Hinterende des Kopiematerials klemmen. Eingangsseitig ist das Hilfsrollenpaar 60 motorisch antreibbar, um das Vorderende des Kopiermaterials einem im Inneren des Kopiergerätes angeordneten Eingaberollenpaar zuzuführen. Sobald detektiert wird, dass dieses das Vorderende des Kopiermaterials gefasst hat, wird der Antrieb für das eingangsseitige Hilfsrollenpaar 60 abgeschaltet und der Spindeltrieb 53 betätigt, um die beiden Rollen des Hilfsrollenpaars 60 wieder auseinanderzubewegen. Ausgangsseitig dient das Hilfsrollenpaar 60 nur zum Festklemmen des detektierten Hinterendes des Kopiermaterials und kommt demgemäss ohne motorischen Antrieb aus. Die Synchronisation des Spindeltriebes 53 für das ausgangsseitige Hilfsrollenpaar 60 erfolgt dabei über einen in den Fig. 7 und 8 nicht dargestellten Detektor für das Kopiermaterialhinterende in der Kopiermaterialtransportbahn, der das Klemmen der Rollen steuert. Das Lösen der Rollen erfolgt nach Ausschalten des Antriebes für den Wickelkern der Aufwickelkassette.

Die Andockschnittstellen für die Kassetten 5, 6 umfassen auch Mittel zur besseren Fixierung der Kassetten in ihren Arbeitsstellungen. Dazu ist unterhalb jedes Kussmauls 51 eine ein- und ausfahrbare Arretierhülse 54 am Kopiergerät 1 vorgesehen. Die Arretierhülse 54 ist mit einem entsprechenden unterhalb des Kassettenmauls 7 an der Kassettenstirnseite 71 angeordneten Zapfen 55 lösbar in Eingriff bringbar. Vorzugsweise erfolgt die Verschiebung der Arretierhülse 54 über einen Spindeltrieb 56, der von einem steuerbaren Motor 62 antreibbar ist. An der Unterseite der Hülse 54 ist ein Keil 58 vorgesehen, der bei angedockter Kassette in eine Vertiefung 57 an der Zapfunterseite ragt. (Fig. 7) Auf diese Weise ist die angedockte Kassette gegen unbeabsichtigtes Wegziehen gesichert.

Die Betätigung des Keiles 58 erfolgt über Abstützmittel 59, die, wie in den Fig. 7 und 8 beispielsweise dargestellt, an einem Schwenkarm 42 angeordnet sind. Gemäss der Darstellung sind die Abstützmittel 59 als an einem Arm befestigte Rolle oder Walze ausgebildet, die einerseits den Stift 58 an der Hülsenunterseite in die Vertiefung 57 an der Zapfunterseite drückt, und die andererseits als Stützelement für die in der Arbeitsstellung vorzugsweise am Kassettenkran 11 aufgehängte Kassette 5 bzw. 6 dient. Die Abstützmittel 59 könnten aber auch als eine Art Wippe ausgebildet sein. In diesem Falle wird die hängende Kassette 5 oder 6 beispielsweise von an den beiden Wippenarmen angeordneten Rollen abgestützt. Die Betätigung des Arretierkeiles 58 erfolgt in diesem Falle über eine an einer Verbindungsstrebe der beiden Wippenarme vorgesehene Nocke.

Die hängende Position der Kassette in der Arbeitsstellung hat dabei den Vorteil, dass Bodenunebenheiten praktisch keine Rolle mehr spielen. Unabhängig von der Bodenbeschaffenheit ist die Kassette und somit das Kassettenmaul 7 in eine wohldefinierte Lage relativ zum Kussmaul 51 bringbar, was das Andocken sehr erleichtert.

Bei der Ausgestaltung derjenigen Elemente der Andockschnittstelle, die mit dem Kassettenmaul 7 und mit dem an der Kassettenstirnseite 71 angeordneten Arretierzapfen 55 in Eingriff bringbar sind, wird insbesondere darauf geachtet, dass die genormten kassettenseitigen Schnittstellenelemente (Kassettenmaul 7, Zapfen 55) unverändert beibehalten werden können. Auf diese Weise ist gewährleistet, dass das erfindungsgemässe Kopiergerät 1 ohne weitere Anpassungen in einen bereits bestehenden Verbund von Fotolaborgeräten (Nassteil, Speicher etc.) einfügbar ist.

Gemäss dem in den Fig. 7 und 8 anhand der Ausgangsseite 4 dargestellten Beispiel einer Andockschnittstelle trägt der bereits erwähnte Schwenkarm 42 ausser den Abstützmitteln 59 auch einen Antriebsmechanismus 40 für den Wickelkern der Aufwickelkassette 6. Insbesondere steht dieser Antriebsmechanismus bei angedockter Kassette 6 und ausgeschwenktem Schwenkarm 42 in Eingriff mit Antriebsübertragungsmitteln 41 an der Aufwickelkassette 6. Im vorliegenden Ausführungsbeispiel ist der Antriebsmechanismus durch ein am Schwenkarm 42 befestigtes und über einen steuerbaren Motor 64 antreibbares Zahnrad 43 gebildet. Die Verschwenkung des Schwenkarms 42 zur Kassette 6 hin bzw. wieder von ihr weg erfolgt vorzugsweise über einen Spindeltrieb, der von einem steuerbaren Motor 61 antreibbar ist. Insbesondere weist dieser Spindeltrieb eine mit dem Kopiergerät 1 verbundene motorisch rotierbare Spindelmutter 45 und eine entsprechend der Rotationsrichtung ein- bzw. ausfahrbare Spindelstange 44 auf, die mit dem Schwenkarm 42 verbunden ist.

Die Antriebsübertragungsmittel 41 an der Kassette sind gemäss dem in den Fig. 7 und 8 dargestellten Ausführungsbeispiel der Kassette 6 in einer gegenüber dem lichtdichten Kassetteninneren abgeschotteten Ausnehmung 73 an der kassettenmaulseitigen Stirnfläche 71 angeordnet. Selbstverständlich könnten sie auch seitlich der Kassette 6 angeordnet sein. Die dargestellten Antriebsübertragungsmittel 41 umfassen einen beidseitig verzahnten Flachriemen 46, der über zwei in der Ausnehmung 73 angeordnete Zahnräder 47, 48 geführt ist. Eines der Zahnräder, im dargestellten Beispiel das obere Zahnrad 47, ist gegen eine Federkraft in Richtung des zweiten Zahrades 48 um eine kleine Wegstrecke auslenkbar. Das zweite Zahnrad 48 ist ortsfest angeordnet und drehfest mit einem dritten koaxialen Zahnrad 49 verbunden, welches vorzugsweise über einen Transmissionsriemen 50 mit dem Wickelkern der Kassette 6 verbunden ist. Besonders vorteilhaft an dieser Ausbildung der Antriebsübertragungsmittel 41 ist, dass auf diese Weise der Antrieb des Wickelkerns der Kassette möglichst ruckfrei erfolgt. Das in die Ausnehmung 73 ragende Zahnrad 43 bleibt auch bei Drehzahlschwankungen aufgrund des Motors oder aufgrund von Unwuchtigkeiten des Wickelkerns stets in Eingriff mit dem Flachriemen 46, da das federnd gelagerte Zahnrad 44 derartige Unregelmässigkeiten ausgleichen kann. Als vorteilhaft ist auch zu erwähnen, dass die Kassette abgesehen von der Ausnehmung 73 in der kassettenseitigen Stirnfläche 71 allseitig geschlossen ausgebildet ist. Das heisst, die Kassette weist allseitig ebene Flächen auf; alle Zahnräder, Schwungräder und alle Antriebs- und Transmissionsriemen sind innerhalb des Kassettengehäuses angeordnet. Der lichtdichte Teil des Gehäuses mit dem Wickelkern und dem Kopiermaterial ist selbstverständlich vom Gehäuseteil, der die Antriebsübertragungsmittel und den Wickelkernantrieb enthält, abgeschottet. Auf diese Weise ausgebildete Kassetten sind sehr eng stapelbar, ohne dass sie verhaken oder sich gegenseitig anderswie behindern.

In analoger Weise sind auch eingangsseitig Antriebsmittel 40 für den Wickelkern der Vorratskassette 5 vorgesehen. Vorzugsweise entspricht deren Aufbau dem Aufbau der ausgangsseitig vorgesehenen Antriebsmittel. Im Betrieb wird der Wickelkern der Vorratskassette 5 ständig angetrieben. Dabei erfolgt die Abstimmung der Antriebsgeschwindigkeiten des Wickelkernantriebes und der Geschwindigkeit des eingangs in der Kopiermaterialtransportbahn vorgesehenen Eingaberollenpaars derart, dass auf das Kopiermaterial eine konstante Zugkraft von etwa 10 N - 20 N, vorzugsweise etwa 15 N ausgeübt wird.

Bei der Bedienung des erfindungsgemässen Kopiergerätes muss das Bedienungspersonal nicht mehr ständig für den Kassettenwechsel bereitstehen. Es muss nur mehr dafür Sorge getragen werden, dass jeweils immer eine zusätzliche Kassette zu der jeweils in der Arbeitsstellung befindlichen Vorrats- bzw. Aufwickelkassette im jeweiligen Stellplatz angeordnet ist. Das Kopiergerät erkennt selbsttätig ob eine Vorratskassette leer ist bzw. ob eine Aufwickelkassette gefüllt ist. Diese Detektion des Entleerungs- bzw. Füllungsgrades der Kassetten kann beispielsweise über lichtelektrische Fühler am Eingang bzw. am Ausgang der Belichtungsstation erfolgen. Es kann aber beispielsweise auch durch eine vorzugsweise elektronische Überwachung der Drehgeschwindigkeiten der Wickelkerne der in der Arbeitsstellung befindlichen Kassetten und Vergleich mit Sollgeschwindigkeiten erfolgen. Wird vom Kopiergerät bzw. von im Kopiergerät vorgesehenen Überwachungs- und Steuereinrichtungen, vorzugsweise eletronischen Einrichtungen, festgestellt, dass die Vorratskassette entleert, bzw. die Aufwickelkassette gefüllt ist, so wird von der Überwachungs- und Steuereinrichtung der automatische Kassettenwechselvorgang in Gang gesetzt. Dabei werden zunächst das jeweilige Kussmaul, der Schwenkarm mit den Antriebsmitteln und die Arretierhülse in das Kopiergerät zurückgefahren. Es versteht sich von selbst, dass dabei auch die Lichtschleusen am Kopiergerät bzw. an den Kassetten lichtdicht geschlossen werden. Die vorzugsweise in ihrer Arbeitsstellung am Kassettenkran auf gehängte Kassette wird sodann abgesetzt, was einfach durch vertikales Absenken der Hubplatte erreicht wird. Daraufhin wird die Laufkatze des Kassettenkrans in ihre hintere Endstellung bewegt. Dabei gleitet die Hubplatte aus den seitlichen Führungen und Widerlagern der vorderen Kassette in die seitlichen Führungen und Widerlager der hinteren Kassette. Durch Anheben der Hubplatte werden die Fixierstifte an den Seitenrändern der Hubplatte in die Bohrungen in den seitlichen Führungen und Widerlagern an der Kassette eingeführt und die Kassette vom Boden angehoben. Daraufhin wird die Laufkatze des Kassettenkrans automatisch wieder in ihre vordere Endposition bewegt. Dabei schiebt die am Kassettenkran hängende hintere Kassette die vordere Kassette quer zur Transportrichtung für das Kopermaterial von der Arbeitsstellung weg und nimmt statt dessen deren Platz ein. Nun werden das Kassettenmaul, die Arretierhülse und der Schwenkarm mit den Antriebsmitteln und den Abstützmitteln wieder aus dem Kopiergerät zur Kassette hin ausgefahren. Das eingangsseitige Hilfsrollenpaar klemmt das Vorderende des Kopiermaterials und führt es dem Engangsrollenpaar zu. Das Einfädeln des Kopiermaterials eingangsseitig in die Transportbahn bzw. ausgangsseitig in die Aufwickelkassette erfolgt wiederum auf die bekannte Art.

Der Ablauf des Kassettenwechsels erfolgt vollautomatisch und erfordert stets den selben Zeitaufwand von etwa 40 Sekunden, unabhängig von den Fertigkeiten des Bedienungspersonals und etwaigen "Reaktionszeiten". Somit sind die Unterbrechungen des Kopierbetriebes nur mehr durch den Zeitaufwand für den automatischen Kassettenwechsel gegeben. Längere Stehzeiten des Kopiergerätes aufgrund von Unaufmerksamkeiten des Bedienungspersonals werden somit vermieden. Zugleich ergibt sich auch für das Bedienungspersonal eine deutliche Erleichterung des Bedienungsvorganges. Das Personal muss nicht mehr exakt im richtigen Augenblick für den Kassettenwechsel bereitstehen. Bei dem erfindungsgemässen Kopiergerät steht dem Bedienungspersonal ein Zeitfenster zur Verfügung, innerhalb dessen wiederum neue volle Vorratskassetten bzw. leere Aufwickelkassetten an die freien hinteren Standplätze angestellt werden müssen. Dieses erstreckt sich über die gesamte Zeit, die bis zum Entleeren der Vorratskassette bzw. zum Auffüllen der Aufwickelkassette erforderlich ist. Bei den derzeitigen Höchstleistungs-Kopiergeräten der Anmelderin mit einer Kopierleistung von bis zu 20 000 Kopien in der Stunde und mehr und bei den üblicherweise in den Kassetten unterbringbaren Kopiermateriallängen von etwa 500 m beträgt dieses Zeitfenster nunmehr wenigstens etwa 8 bis 11 Minuten.

Das erfindungsgemässe Kopiergerät ist über dies auch sehr kompakt in seinem Aufbau. Vorzugsweise beträgt seine Gesamttiefe nicht mehr als 80 cm, so dass es durch die in Gebäuden verwendeten Türstöcke transportierbar bleibt. Besonders hervorzuheben ist aber, dass auch mit angestellten Kassetten der erforderliche Platzbedarf nicht wesentlich über den Platzbedarf für das Kopiergerät hinausgeht. Die Kassetten ragen nur unwesentlich über die Abmessungen des Kopiergerätes hinaus. Auch ragen keine Verschiebe- oder Zugmittel aus dem Gerät heraus, die ein gefährliches Hindernis für das Bedienungspersonal darstellen könnten, wenn einmal keine Kassetten angestellt sind. Zusätzliche, platzaufwendige Umlenkmittel für das Kopiermaterial, die über dies die Beschichtung des Kopiermaterials beschädigen können, werden vermieden. Insgesamt ist das erfindungsgemässe Kopiergerät bedienungsfreundlich für das Personal, kompakt in seinem Aufbau und erlaubt höchste Kopierleistungen bei möglichst kurzen Stillstandzeiten.

## Patentansprüche

1. Fotografisches Kopiergerät (1) zur Verarbeitung von in fahrbaren Kassetten (5,6) mit einem Wickelkern und einem Kassettenmaul (7) untergebrachtem fotografischen Kopiermaterial (M),
mit einer Belichtungsstation (2) mit einem ersten Kußmaul (51) zum Andocken des Kassettenmauls (7) einer ersten, als Vorratskassette (5) dienenden ersten Kassette und einem zweiten Kußmaul (51) auf einer dem ersten Kußmaul (51) gegenüberliegenden Seite der Belichtungsstation (2) zum Andocken des Kassettenmauls (7) einer zweiten, als Aufwickelkassette (6) dienenden zweiten Kassette,
mit automatisch arbeitenden Transportmitteln zum Einfädeln des Kopiermaterials (M) von der Vorratskassette (5) in eine in der Belichtungsstation verlaufende und mit den Kußmäulern (51) fluchtende Transportbahn (T) und zum Einfädeln des Kopiermaterials (M) von der Transportbahn (T) in die Aufwickelkassette (6), und
mit Kassettentransportvorrichtungen (11) zum Bewegen der Kassetten (5, 6) in einer quer zur Transportbahn (T) verlaufenden Kassettentransportrichtung (N) aus der Andockstellung heraus und zum Bewegen von zusätzlich bereitgestellten Ersatzkassetten in die Andockstellung,
**dadurch gekennzeichnet**, **daß** die Kassettentransportvorrichtungen (11) so ausgebildet sind, daß beim Transport einer angedockten ersten bzw. zweiten Kassette (5; 6) aus der Andockstellung heraus gleichzeitig eine in Kassettentransportrichtung (N) gesehen unmittelbar hinter der ersten bzw. zweiten Kassette aufgestellte erste bzw. zweite Ersatzkassette in der Kassettentransportrichtung (N) in die Andockstellung verschoben wird.

2. Vorrichtung nach Patentanspruch 1, dadurch gekennzeichnet, dass die Kassettentransportvorrichtung (11) als Kassettenkran ausgebildet ist, der eingangs- bzw. ausgangsseitig des Kopiergerätes jeweils oberhalb der Kassetten angeordnet und quer zur Transportbahn (T) für das Kopiermaterial (M) bewegbar ist.

3. Vorrichtung nach Patentanspruch 2, dadurch gekennzeichnet, dass der Kassettenkran (11) eine Laufkatze (12), die in quer zur Transportbahn für das Kopiermaterial im Kopiergerät vorgesehenen seitlichen Führungen (14, 15) von einer Endposition in eine zweite Endposition horizontal bewegbar ist, und eine darunter angeordnete Hubplatte (13), die zusammen mit der Laufkatze in horizontale Richtung (H) bewegbar und gegenüber der Laufkatze (12) vertikal (V) verstellbar ist, umfasst.

4. Vorrichtung nach Patentanspruch 3, dadurch gekennzeichnet, dass die Hubplatte (13) Spindelsäulen (32, 33, 34) aufweist, die sich von der Oberseite der Hubplatte vertikal nach oben erstrecken und mit an der Laufkatze angeordneten rotierbaren Spindelmuttern (19, 20, 21) derart in Eingriff stehen, dass die Hubplatte (13) durch Rotation der Spindelmuttern anheb- oder absenkbar ist.

5. Vorrichtung nach Patentanspruch 3, dadurch gekennzeichnet, dass die Horizontalbewegung (H) der Laufkatze (12) mit Hilfe eines Spindeltriebes erfolgt, der einen Antriebsmotor (25), der mit dem Rahmen des Kopiergerätes (1) verbunden ist, eine rotierbare Spindelstange (26), die mit dem Rotor des Motors (25) verbunden ist, und eine mit der Laufkatze (12) verbundene Spindelmutter (27) umfasst, wobei die Spindelstange (26) derart in Eingriff mit der Spindelmutter (27) steht, dass durch Rotation der Spindelstange (26) die Spindelmutter (27), und mit ihr die Laufkatze (12), entlang des mit einem Gewinde versehenen Teils der Spindelstange (26) verschiebbar ist.

6. Vorrichtung nach einem der vorangehenden Patentansprüche, dadurch gekennzeichnet, dass das Kopiergerät (1) eingangs- und ausgangsseitig der Belichtungsstation je einen Antriebsmechanismus (40) für die Wickelkerne der Vortatskassette (5) und der Aufwickelkassette (6) umfasst, die aus einer ersten Position, in der sie in Eingriff mit Antriebsübertragungsmitteln (41) an den angedockten Kassetten (5 bzw. 6) stehen, in eine zweite Position bewegbar sind, in der sie ausser Eingriff mit den Antriebsübertragungsmitteln (41) stehen.

7. Vorrichtung nach Patentanspruch 6, dadurch gekennzeichnet, dass jeder Antriebsmechanismus (40) in der ersten angedockten Positionin eine Ausnehmung (73) an der kassettenmaulseitigen Stirnfläche (71) der Kassette (5 bzw. 6) ragt, in der die Antriebsübertragungsmittel (41) angeordnet sind.

8. Vorrichtung nach Patentanspruch 7, dadurch gekennzeichnet, dass der Antriebsmechanismus (40) für den Wickelkern durch ein an einem Schwenkarm (42) angeordnetes, motorisch antreibbares Zahnrad (43) gebildet ist, und dass die Antriebsübertragungsmittel (41) in der Ausnehmung (73) an der Stirnseite (71) der Kassette (5 bzw. 6) durch einen beidseitig verzahnten Flachriemen (46) gebildet sind, der über zwei Zahnräder (47, 48) geführt ist, von denen eines (47) gegen eine Federkraft in Richtung des zweiten Zahnrades (48) um eine kleine Wegstrecke auslenkbar ist, während das zweite Zahnrad (48) ortsfest angeordnet und drehfest mit einem dritten koaxialen Zahnrad (49) verbunden ist, welches vorzugsweise über einen Transmissionsriemen (50) mit dem Wickelkern gekoppelt ist.

9. Vorrichtung nach einem der vorangehenden Patentansprüche, dadurch gekennzeichnet, dass die eingangs- bzw. ausgangsseitig der Belichtungsstation (2) am Kopiergerät (1) vorgesehenen Kussmäuler (51) aus einer Arbeitsposition, in der sie seitlich der Belichtungsstation (2) aus dem Kopiergerät (1) herausragen und die Kassettenmäuler (7) lichtdicht umschliessen, in eine zweite Position zurückziehbar sind, in der sie die Kassettenmäuler (7) der noch in der Arbeitsstellung befindlichen Kassetten zum Kassettenwechsel freigeben.

10. Vorrichtung nach einem der vorangehenden Patentansprüche, dadurch gekennzeichnet, dass unterhalb der Kussmäuler (51) jeweils eine motorisch, vorzugsweise über einen Spindeltrieb (56) ein- und ausfahrbare Arretierhülse (54) am Kopiergerät (1) vorgesehen ist, welche mit einem entsprechenden unterhalb des Kassettenmauls (7) an der Kassettenstirnseite (71) angeordneten Zapfen (55) in lösbaren Eingriff bringbar ist.

## Claims

1. Photographic copying apparatus (1) for the processing of photographic copying material (M) housed in mobile cassettes (5,6) having a winding core and a cassette opening (7) comprising
an exposure station (2) having a first gripping opening (51) for engaging the cassette opening (7) of a first cassette acting as a supply cassette (5), and a second gripping opening (51) on a side of the exposure station (2) opposite to the first gripping opening (51) for engaging the cassette opening (7) of a second cassette acting as a take-up cassette (6),
automatic transport means for threading the copying material (M) from the supply cassette (5) into a transport path (T) that extends in the exposure station and is aligned with the gripping openings (51), and for threading the copying material (M) from the transport path (T) into the take-up cassette (6), and
cassette transport devices (11) for moving the cassettes (5,6), in a cassette transport direction (N) that extends transversely to the transport path (T), out of the engagement position, and for moving additionally supplied replacement cassettes into the engagement position,
wherein the cassette transport devices (11) are so constructed that during the transport of an engaged first or second cassette (5; 6) out of the engagement position, a first or second replacement cassette which, viewed in the direction of transport (N) of the cassettes, is positioned directly behind the first or second cassette, is at the same time moved in the direction of transport (N) of the cassettes into the engagement position.

2. Apparatus according to patent claim 1, wherein the cassette transport device (11) is constructed as a cassette crane, which is arranged at the inlet side and at the outlet side of the copying apparatus above the respective cassette and which is movable transversely to the transport path (T) for the copying material (M).

3. Apparatus according to patent claim 2, wherein the cassette crane (11) comprises a trolley (12) that is movable horizontally, in lateral guides (14, 15) provided transversely to the transport path for the copying material in the copying apparatus, from one end position into a second end position, and a lift plate (13) located under the trolley, which lift plate is movable in the horizontal direction (H) together with the trolley and is vertically (V) displaceable relative to the trolley (12).

4. Apparatus according to patent claim 3, wherein the lift plate (13) has spindle columns (32, 33, 34) which extend vertically upwards from the upper side of the lift plate and are so engaged with rotatable spindle nuts (19, 20, 21) located on the trolley that the lift plate (13) can be raised or lowered by rotation of the spindle nuts.

5. Apparatus according to patent claim 3, wherein the horizontal movement (H) of the trolley (12) is effected with the aid of a spindle drive that comprises a drive motor (25) which is connected to the frame of the copying apparatus (1), a rotatable spindle rod (26) which is connected to the rotor of the motor (25), and a spindle nut (27) which is connected to the trolley (12), the spindle rod (26) being so engaged with the spindle nut (27) that by rotation of the spindle rod (26) the spindle nut (27), and with it the trolley (12), is displaceable along the portion of the spindle rod (26) provided with a thread.

6. Apparatus according to any one of the preceding patent claims, wherein the copying apparatus (1) comprises at the inlet side and at the outlet side of the exposure station a respective drive mechanism (40) for the winding core of the supply cassette (5) and of the take-up cassette (6), which drive mechanisms are movable out of a first position, in which they are engaged with drive transmission means (41) on the engaged cassette (5 and 6) into a second position in which they are not engaged with the drive transmission means (41).

7. Apparatus according to patent claim 6, wherein each drive mechanism (40) projects in the first engaged position into a recess (73) in the end face (71), on the cassette opening side, of the cassette (5 and 6), in which recess the drive transmission means (41) are arranged.

8. Apparatus according to patent claim 7, wherein the drive mechanism (40) for the winding core is formed by a motor-driven toothed wheel (43) arranged on a pivot arm (42), and the drive transmission means (41) in the recess (73) at the end face (71) of the cassette (5 and 6) are formed by a flat belt (46) toothed on both sides, which belt runs over two toothed wheels (47, 48), one of which (47) can be deflected against a spring force by a short distance in the direction of the second toothed wheel (48), while the second toothed wheel (48) is arranged in fixed position and is connected to rotate with a third coaxial toothed wheel (49) that is coupled to the winding core preferably by a transmission belt (50).

9. Apparatus according to any one of the preceding patent claims, wherein the gripping openings (51) provided on the copying apparatus (1) at the inlet side and outlet side of the exposure station (2) are retractable from an operating position, in which they project from the copying apparatus (1) at the sides of the exposure station (2) and surround the cassette openings (7) in a light-tight manner, into a second position in which they release the cassette openings (7) of the cassettes still located in the operating position in order for the cassettes to be changed.

10. Apparatus according to any one of the preceding patent claims, wherein there is provided on the copying apparatus (1) below each gripping opening (51) an arresting sleeve (54) which can be moved in and out by a motor, preferably by way of a spindle drive (56), which sleeve can be brought into releasable engagement with a corresponding pin (55) arranged beneath the cassette opening (7) at the cassette end face (71).

## Revendications

1. Tireuse photographique (1) pour traiter du matériau de tirage photographique (M) logé dans des cassettes roulantes (5, 6) possédant un axe de bobinage et une ouverture d'entrée/sortie de matériau photographique ou bouche (7),
comprenant un poste d'exposition (2) pourvu d'une première bouche de raccordement (51) pour le couplage avec la bouche (7) d'une première casette servant de cassette débitrice (5), ainsi que d'une seconde bouche de raccordement (51) située sur le côté opposé du poste d'exposition (2), par rapport à la première bouche de raccordement (51), et destinée au couplage avec la bouche (7) d'une deuxième cassette (6) servant de cassette réceptrice,
comprenant des moyens de transport fonctionnant automatiquement pour enfiler le matériau de tirage (M) venant de la cassette débitrice (5) dans un trajet de transport (T) s'étendant dans le poste d'exposition et aligné avec les bouches de raccordement (51) et pour enfiler le matériau de tirage (M) venant du trajet de transport (T) dans la cassette réceptrice (6) et
comprenant des dispositifs de transport de cassettes (11) pour déplacer les cassettes (5, 6), suivant une direction de transport de cassettes (N) transversale au trajet de transport (T), hors de la position de couplage et pour amener des cassettes de remplacement, mises à disposition en supplément, à la position de couplage,
**caractérisé en ce que** les dispositifs de transport de cassettes (11) sont réalisés de manière que lors du transport d'une première ou d'une deuxième cassette couplée (5; 6) hors de la position de couplage, une première ou une deuxième cassette de remplacement, placée directement derrière cette première ou deuxième cassette dans la direction de transport de cassettes (N), soit amenée simultanément à la position de couplage dans la direction de transport de cassettes (N).

2. Dispositif selon la revendication 1, caractérisé en ce que le dispositif de transport de cassettes (11) est réalisé comme un pont roulant de cassettes qui est disposé, du côté de l'entrée et du côté de la sortie de la tireuse, chaque fois au-dessus des cassettes et est déplaçable transversalement au trajet de transport (T) pour le matérieu de tirage (M).

3. Dispositif selon la revendication 2, caractérisé en ce que le pont roulant de cassettes (11) comprend un chariot (12) déplaçable horizontalement d'une première position extrême à une seconde position extrême dans des guidages latéraux (14, 15) prévus transversalement au trajet de transport du matériau de tirage dans la tireuse, ainsi qu'un plateau de levage (13) placé sous ce chariot, plateau qui est déplaçable ensemble avec le chariot en direction horizontale (H) et réglable verticalement (V) par rapport à ce chariot (12).

4. Dispositif selon la revendication 3, caractérisé en ce que le plateau de levage (13) comporte des broches sous forme de colonnes filetées (32, 33, 34) qui s'étendent verticalement vers le haut à partir du dessus du plateau de levage et sont en prise avec des écrous de broche (19, 20, 21) montés rotatifs sur le chariot, de manière que le plateau de levage (13) puisse être soulevé ou abaissé par la rotation des écrous de broche.

5. Dispositif selon la revendication 3, caractérisé en ce que le déplacement horizontal (H) du chariot (12) est produit à l'aide d'une commande à broche comprenant un moteur d'entraînement (25) relié au bâti de la tireuse (1), une broche ou tige filetée (26) rotative reliée au rotor du moteur (25) et un écrou de broche (27) relié au chariot (12), la tige filetée (26) coopérant avec l'écrou de broche (27) de manière que la rotation de la tige filetée (26) provoque le déplacement de l'écrou de broche (27), et le chariot (12) avec lui, le long de la partie de la tige (26) pourvue d'un filetage.

6. Dispositif selon une des revendications précédentes, caractérisé en ce que la tireuse (1) comporte, à l'entrée et à la sortie du poste d'exposition, un mécanisme d'entraînement (40) pour l'axe de bobinage de la cassette débitrice (5) ou pour l'axe de bobinage de la cassette réceptrice (6), mécanisme qui peut être amené d'une première position, dans lequel il est en prise avec des moyens de transmission pour l'entraînement (41) prévus sur la cassette (5 ou 6) couplée, à une seconde position dans laquelle ce mécanisme n'est pas en prise avec ces moyens de transmission pour l'entraînement (41).

7. Dispositif selon la revendication 6, caractérisé en ce que chaque mécanisme d'entraînement (40) fait saillie, à la première position ou position de couplage, dans un évidement (73) prévu dans la face d'extrémité (71) où se trouve la bouche de la cassette (5 ou 6) et dans lequel sont disposés les moyens de transmission pour l'entraînement (41).

8. Dispositif selon la revendication 7, caractérisé en ce que le mécanisme d'entraînement (40) pour l'axe de bobinage est formé par un pignon (43) monté sur un bras oscillant (42) et pouvant être entraîné par moteur, et que les moyens de transmission pour l'entraînement (41) dans l'évidement (73) de la face d'extrémité (71) de la cassette (5 ou 6) sont formés par une courroie plane (46) crantée sur les deux faces et passant par deux pignons (47, 48) dont l'un (47) peut être dévié sur une courte distance en direction du deuxième pignon (48), à l'encontre d'une force élastique, tandis que le deuxième pignon (48) est monté en un point fixe et solidarisé en rotation avec un troisième pignon (49) coaxial qui est de préférence accouplé à l'axe de bobinage par l'intermédiaire d'une courroie de transmission (50).

9. Dispositif selon une des revendications précédentes, caractérisé en ce que les bouches de raccordement (51), prévues du côté de l'entrée et du côté de la sortie du poste d'exposition (2) sur la tireuse (1), sont rétractables d'une position de travail, dans laquelle elles dépassent de la tireuse (1), sur les côtés du poste d'exposition (2), et entourent de façon étanche à la lumière les bouches (7) des cassettes, à une seconde position dans laquelle elles libèrent les bouches (7) des cassettes se trouvant encore en position de travail en vue du remplacement de cassettes.

10. Dispositif selon une des revendications précédentes, caractérisé en ce qu'une douille d'arrêt (54) est prévue sous chaque bouche de raccordement (51) sur la tireuse (1), douille qui est rétractable et extensible par un moteur, de préférence par l'intermédiaire d'une commande à broche (56), et qui peut être engagée de façon détachable sur un tenon (55) correspondant, placé sous la bouche (7) de la face d'extrémité (71) de la cassette.
